# FASCICULE DE BREVET EUROPEEN

(11) **EP 1 428 465 B1**
(45) Date de publication et mention de la délivrance du brevet: **18.01.2006**
(21) Numéro de dépôt: 03356196.0
(22) Date de dépôt: 09.12.2003
(51) Int. Cl.: A47J 37/12

(54) **Appareil electrique de cuisson comportant un boitier muni de moyens de prehension**
Elektrisches Kochgerät mit einem Gehäuse mit einem Griffteil
Electric cooking apparatus including a housing with gripping means

(30) Priorité: 13.12.2002 FR 0215830
(43) Date de publication de la demande: 16.06.2004
(73) Titulaire: SEB S.A., 69130 Ecully (FR)
(72) Inventeur: Blaise, Nicolas, 14000 Caen (FR); Federico, Dominique, 21800 Chevigny Saint Sauveur (FR); Pellerin, Olivier, 21510 Minot (FR)
(74) Mandataire: Kiehl, Hubert

(56) Documents cités:
- US-A- 3 801 331
- US-A- 6 002 111

## Description

La présente invention concerne le domaine technique des appareils électriques de cuisson comportant une cuve montée dans un boîtier réalisé en matière plastique. La présente invention concerne notamment, mais non exclusivement, les friteuses électriques.

Les boîtiers réalisés en matière plastique permettent de limiter les risques de brûlure lors d'un contact avec la paroi latérale de l'appareil. De plus, de tels boîtiers peuvent comporter des organes de préhension pour faciliter le déplacement de l'appareil.

II est connu du document EP 0 295 159 un appareil de cuisson à chauffage électrique dont le boîtier comporte deux cavités destinées à la préhension, respectivement dans la partie supérieure de la face avant et dans la partie supérieure de la face arrière. Les cavités sont ménagées dans les parois latérales d'une jupe montée entre une bague supérieure supportant la cuve et un socle fermant la partie inférieure de la jupe. Il est connu du document WO 96/04832 un appareil de chauffe pour aliments dont le boîtier comporte une jupe montée sur un socle formant un renfoncement destiné à la préhension. Une façade est rapportée sur la face avant de la jupe. Des organes de préhension sont ménagés dans la paroi latérale du socle. Les organes de préhension des réalisations précitées présentent toutefois l'inconvénient de ne pas être très perceptibles par l'utilisateur et d'offrir une prise en main assez malaisée.

L'objet de l'invention est de proposer un appareil électrique de cuisson du type précité, dans lequel la préhension est facilitée, et dont la construction est économique.

Cet objet est atteint avec un appareil électrique de cuisson comportant un boîtier présentant une ouverture supérieure dans laquelle est disposée une cuve prévue pour contenir un liquide de cuisson, le boîtier comportant une paroi latérale annulaire inférieure et une paroi latérale annulaire supérieure réalisées en matière plastique, deux organes de préhension diamétralement opposés étant issus du boîtier, chaque organe de préhension comportant une face inférieure issue de la paroi latérale annulaire inférieure, caractérisé en ce que chaque organe de préhension comporte une face supérieure issue de la paroi latérale annulaire supérieure, les faces inférieures et supérieures étant proéminentes respectivement par rapport à la paroi latérale annulaire inférieure et par rapport à la paroi latérale annulaire supérieure. Ces dispositions permettent une préhension par pincement, plus sûre qu'une préhension par simple soulèvement. La construction est de plus particulièrement économique car il n'est pas nécessaire de rapporter des pièces supplémentaires pour réaliser les organes de préhension.

Avantageusement alors les organes de préhension sont creux. Cette disposition permet une meilleure isolation thermique. De préférence, l'espace ménagé entre la face inférieure et la face supérieure des organes de préhension communique avec l'espace intérieur délimité par les parois latérales annulaires du boîtier.

Avantageusement encore la paroi latérale annulaire inférieure et la paroi latérale annulaire supérieure forment deux demi-coques, la paroi latérale annulaire inférieure étant reliée à un fond, et la paroi latérale annulaire supérieure entourant l'ouverture supérieure. En d'autres termes, les parois latérales annulaires sont galbées. Cette disposition permet une meilleure rigidité du boîtier.

Selon une disposition avantageuse la face inférieure et la face supérieure des organes de préhension sont assemblées au moyen de vis. Toutefois l'assemblage de la paroi latérale annulaire inférieure et de la paroi latérale annulaire supérieure ne s'effectue pas nécessairement au niveau des organes de préhension.

Avantageusement alors pour un meilleur aspect et un nettoyage plus aisé la face inférieure desdits organes de préhension comporte au moins un perçage apte à recevoir une vis venant en prise dans un logement de la face supérieure.

Selon une autre disposition avantageuse la paroi latérale annulaire inférieure comporte au moins un montant assemblé par vis avec un montant issu de la paroi latérale annulaire supérieure. Les montants peuvent être intérieurs ou extérieurs.

Les montants peuvent notamment appartenir à une conformation prévue pour l'enroulement du cordon électrique de l'appareil.

Avantageusement encore pour une meilleure préhension, une cavité est ménagée sous chacune des faces inférieures des organes de préhension.

Avantageusement encore pour une manipulation plus aisée de l'appareil les organes de préhension sont issus de la moitié supérieure du boîtier.

L'invention sera mieux comprise à l'étude de deux exemples de réalisation, pris à titre nullement limitatif, illustrés dans les figures annexées, dans lesquelles :
- la figure 1 est une vue en coupe d'un premier exemple de réalisation d'un appareil de cuisson selon l'invention,
- la figure 2 est une vue de dessous en perspective de l'appareil montré à la figure 1, dans laquelle la partie inférieure du boîtier a été retirée,
- la figure 3 est une vue de dessus en perspective de la partie inférieure du boîtier de l'appareil montré à la figure 1,
- la figure 4 est une vue de face d'un deuxième exemple de réalisation d'un appareil de cuisson selon l'invention,
- la figure 5 est une vue de côté en coupe partielle de l'appareil montré à la figure 4,
- la figure 6 est une vue de dessous en éclaté de l'appareil montré aux figures 4 et 5.

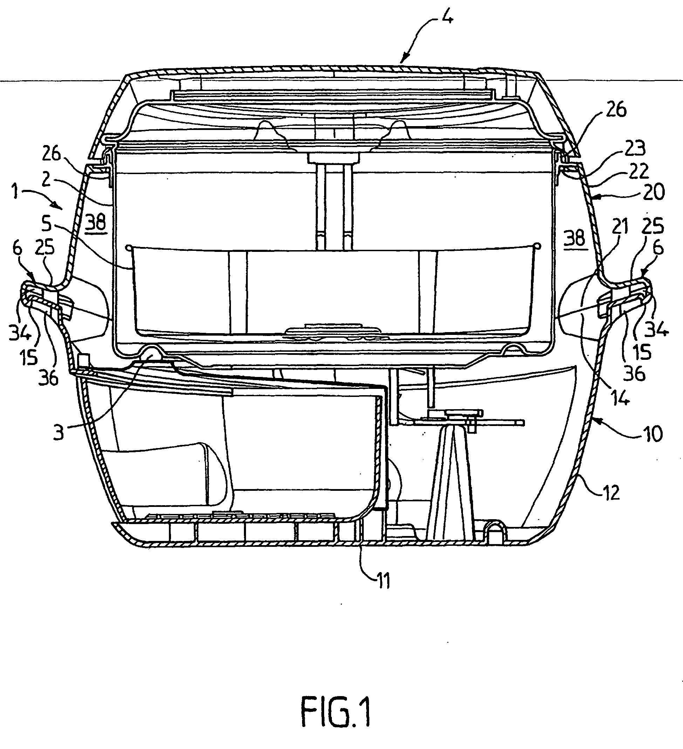

Un premier exemple de réalisation est montré aux figures 1 à 3. La figure 1 montre une friteuse comportant un boîtier extérieur 1 dans lequel est logée une cuve 2 prévue pour contenir un bain de friture. La cuve 2 est montée fixe dans le boîtier 1. La cuve 2 est associée à des moyens de chauffe électriques 3. Les moyens de chauffe 3 sont formés par un élément chauffant blindé monté sous la cuve 2. Le boîtier 1 entoure à distance la partie inférieure de la cuve 2 ainsi que la partie médiane de la cuve 2 formée par les parois latérales de la cuve 2 à l'exception de la partie supérieure. Le boîtier 1 est fermé par un couvercle 4. La cuve 2 peut recevoir un panier 5 destiné à contenir les aliments à frire. Le boîtier 1 présente des organes de préhension 6.

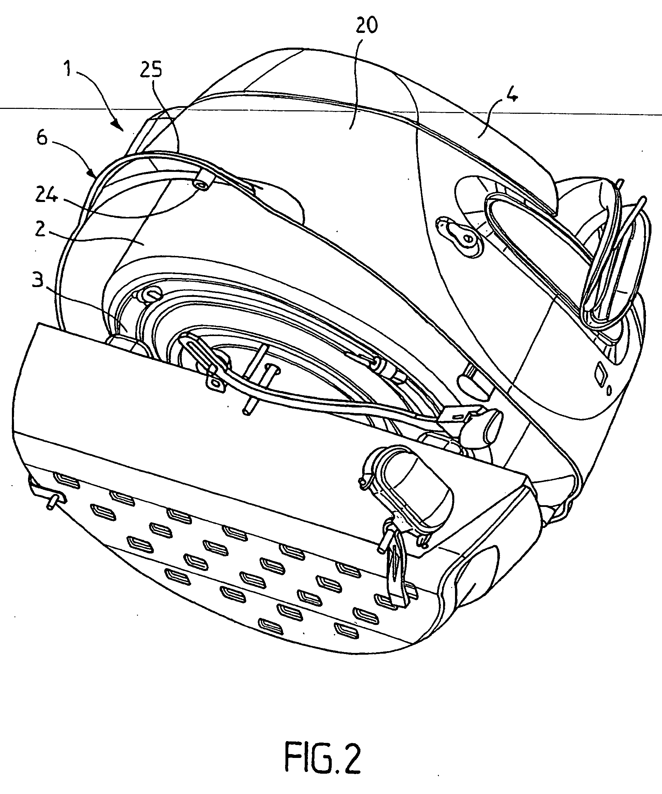

Le boîtier 1 visible aux figures 1 et 2 comporte une partie inférieure 10 et une partie supérieure 20.

La partie inférieure 10 du boîtier 1 forme un socle. La partie inférieure 10 comprend un fond 11 relié à une paroi latérale annulaire 12 définissant une ouverture supérieure 14. Dans la figure 2, la partie inférieure 10 du boîtier 1 a été retirée.

La partie supérieure 20 du boîtier 1 forme une jupe. La partie supérieure 20 comporte une paroi latérale annulaire 22 définissant une ouverture inférieure 21 et une ouverture supérieure 23. La partie inférieure 10 et la partie supérieure 20 du boîtier 1 sont réalisées en matière plastique, par exemple en polypropylène. Une bague 26 repose sur la partie supérieure 20 du boîtier 1. Le bord supérieur de la cuve 2 repose sur la bague 26. La bague 26 est réalisée en matière plastique résistant aux températures élevées atteintes par le bord supérieur de la cuve lors de la friture, telle que par exemple le PBTP.

La partie inférieure 10 et la partie supérieure 20 du boîtier 1 peuvent être aisément obtenues par moulage. La paroi latérale annulaire inférieure 12 et la paroi latérale annulaire supérieure 22 forment deux demi-coques dans lesquelles est logée la cuve 2.

Le boîtier 1 comporte deux organes de préhension 6 disposés de manière diamétralement opposée. Les organes de préhension 6 comportent une face inférieure 15 issue de la paroi latérale annulaire inférieure 12 et une face supérieure 25 issue de la paroi latérale annulaire supérieure 22. Les organes de préhension 6 sont proéminents par rapport aux parois latérales 12, 22. Les organes de préhension 6 sont creux. Un espace 34 est ménagé entre la face inférieure 15 et la face supérieure 25 de chaque organe de préhension 6. Les espaces 34 communiquent avec un espace périphérique intérieur 38 entourant la partie médiane et la partie inférieure de la cuve 2. Une cavité 36 ménagée sous chacune des faces inférieures 15 permet une meilleure préhension, en particulier lorsque le boîtier 1 est gras. Tel que visible aux figures 1, 2 et 3, chaque face inférieure 15 comporte un perçage 19 prévu pour recevoir une vis de fixation (non montrée aux figures) venant en prise dans un logement 24 de la face supérieure 25 correspondante.

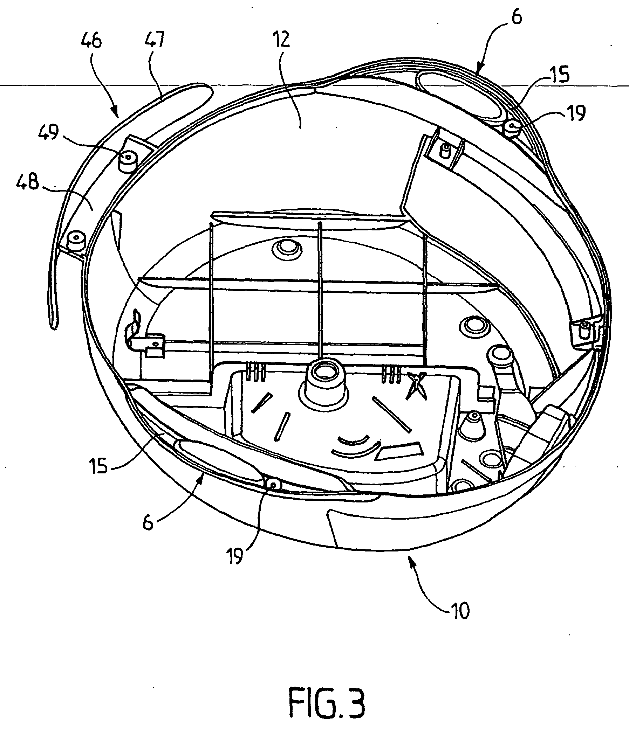

Le boîtier 1 comporte sur sa face arrière une conformation 46, prévue pour l'enroulement du cordon électrique de l'appareil. Tel que montré à la figure 3, la conformation 46 présente une paroi 47 reliée par un montant 48 à la paroi latérale annulaire inférieure 12. Le montant 48 comporte deux perçages 49 prévus chacun pour recevoir une vis de fixation venant en prise dans un logement ménagé dans un montant issu de la paroi latérale annulaire supérieure 22, non visible sur les figures.

Les deux organes de préhension 6 proéminents disposés de manière diamétralement opposée sur le boîtier 1 permettent une manipulation aisée de l'appareil. De plus la construction du boîtier 1 est particulièrement économique, du fait qu'aucune pièce de structure additionnelle n'est nécessaire pour réaliser les poignées, et que l'assemblage du boîtier 1 est facilité.

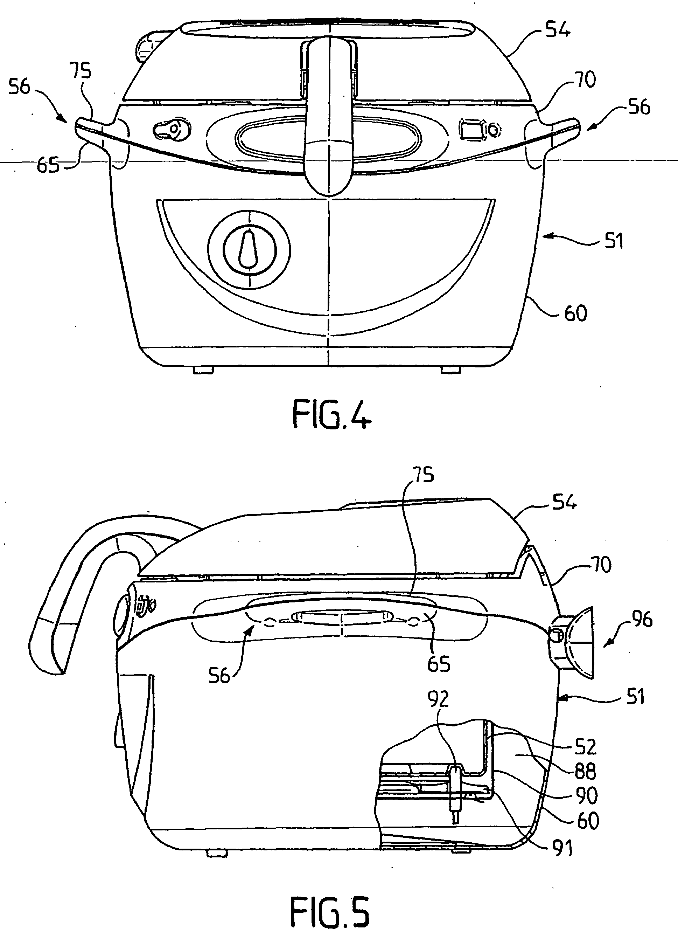

Le deuxième exemple de réalisation montré aux figures 4 à 6 se rapporte à une friteuse comportant une cuve 52 montée amovible dans un boîtier 51. Le boîtier 51 comporte une partie inférieure 60 et une partie supérieure 70.

La partie supérieure 70 du boîtier 51 est réalisée en matière plastique résistant aux températures élevées atteintes par le bord supérieur de la cuve lors de la friture, telle que par exemple le PBTP. La partie supérieure 70 présente une paroi latérale 72 formant une demi coque retournée percée d'une ouverture supérieure 73. Une jupe 74 issue de la face inférieure de la paroi 72 entoure l'ouverture 73.

Une contre-cuve 90 est montée sous la partie supérieure 70 autour de la jupe 74. La contre-cuve 90 est assemblée avec la partie supérieure 70 au moyen de vis. Un réflecteur 91 est disposé sur le fond de la contre-cuve 90. Un élément chauffant blindé 92 est agencé au dessus du réflecteur 91. La cuve amovible 52 repose sur l'élément chauffant 92. Un couvercle 54 est monté articulé sur la partie supérieure 70 du boîtier 51.

La partie inférieure 60 du boîtier 51 comporte un fond 61 raccordé à une paroi latérale annulaire 62 ménageant une ouverture supérieure prévue pour loger la contre-cuve 90. La hauteur de la paroi latérale annulaire 62 de la partie inférieure 60 est supérieure à la hauteur de la paroi latérale annulaire 72 de la partie supérieure 70. La partie inférieure 60 est par exemple réalisée en polypropylène.

Du fait que la contre-cuve 90 est interposée entre le boîtier 51 et la cuve 52, le boîtier 51 entoure à distance la partie inférieure de la cuve 52 ainsi que la partie médiane de la cuve 52 formée par les parois latérales de la cuve 52 à l'exception de la partie supérieure.

La paroi latérale annulaire inférieure 62 et la paroi latérale annulaire supérieure 72 forment deux demi-coques dans lesquelles_est logée la cuve 52.

Le boîtier 51 comporte deux organes de préhension 56 disposés de manière diamétralement opposée. Les organes de préhension 56 sont proéminents par rapport à aux parois latérales annulaires 62, 72. Les organes de préhension 56 sont creux. Un espace 84 est ménagé entre la face inférieure 65 et la face supérieure 75 de chaque organe de préhension 56. Les espaces 84 communiquent avec un espace périphérique intérieur 88 entourant la partie médiane et la partie inférieure de la contre-cuve 90 dans laquelle est placée la cuve 52. Les organes de préhension 56 comportent une face inférieure 65 issue de la paroi latérale annulaire inférieure 62 et une face supérieure 75 issue de la paroi latérale annulaire supérieure 72. Chaque face inférieure 65 comporte deux perçages 69 prévus chacun pour recevoir une vis de fixation (non montrée aux figures) venant en prise dans un logement 76 de la face supérieure 75 correspondante. Une cavité 86 est ménagée sous chacune des faces inférieures 65 pour une meilleure préhension.

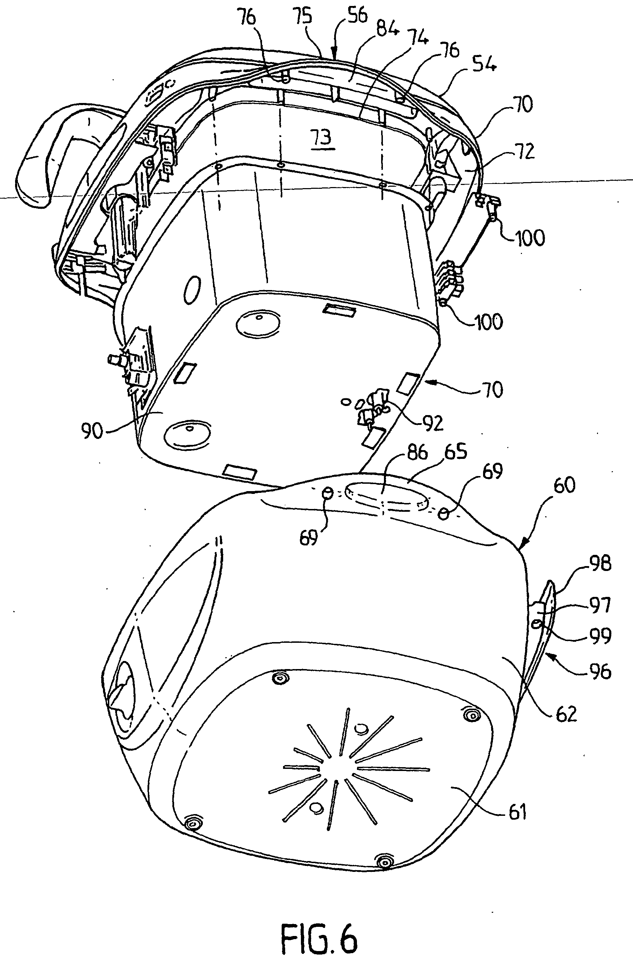

Le boîtier 51 comporte sur sa face arrière une conformation 96, prévue pour l'enroulement du cordon électrique de l'appareil. Tel que montré à la figure 6, la conformation 96 présente une paroi 97 reliée par un montant 98 à la paroi latérale annulaire inférieure 62. Le montant 98 comporte deux perçages 99 prévus chacun pour recevoir une vis de fixation venant en prise dans un logement ménagé dans un montant 100 issu de la paroi latérale annulaire supérieure 72.

A titre de variante pour l'un ou l'autre des exemples de réalisation, les organes de préhension diamétralement opposés peuvent être formés par deux portions de collerette appartenant respectivement à la partie supérieure et à la partie inférieure du boîtier, voire à deux collerettes faisant le tour de la paroi latérale du boîtier, appartenant respectivement à la partie supérieure et à la partie inférieure du boîtier.

La présente invention n'est nullement limitée aux exemples de réalisation décrits et à leurs variantes, mais englobe de nombreuses modifications dans le cadre des revendications.

## Revendications

1. Appareil électrique de cuisson comportant un boîtier (1 ; 51) présentant une ouverture supérieure (23 ; 73) dans laquelle est disposée une cuve (2 ; 52) prévue pour contenir un liquide de cuisson, le boîtier comportant une paroi latérale annulaire inférieure (12 ; 62) et une paroi latérale annulaire supérieure (22;72) réalisées en matière plastique, deux organes de préhension (6 ; 56) diamétralement opposés étant issus du boîtier (1 ; 51), chaque organe de préhension (6 ; 56) comportant une face inférieure (15 ; 65) issue de la paroi latérale annulaire inférieure (12 ; 62), **caractérisé en ce que** chaque organe de préhension (6 ; 56) comporte une face supérieure (25 ; 75) issue de la paroi latérale annulaire supérieure (22 ; 72), les faces inférieures (15; 65) et supérieures (25; 75) étant proéminentes respectivement par rapport à la paroi latérale annulaire inférieure (12 ; 62) et par rapport à la paroi latérale annulaire supérieure (22, 72).

2. Appareil électrique de cuisson selon la revendication 1, **caractérisé en ce que** les organes de préhension (6 ; 56) sont creux.

3. Appareil électrique de cuisson selon l'une des revendications 1 ou 2, **caractérisé en ce que** la paroi latérale annulaire inférieure (12 ; 62) et la paroi latérale annulaire supérieure (22 ; 72) forment deux demi-coques, la paroi latérale annulaire inférieure (12 ; 62) étant reliée à un fond (11 ; 61), et la paroi latérale annulaire supérieure (22 ; 72) entourant une ouverture supérieure (23 ; 73).

4. Appareil électrique de cuisson selon l'une des revendications 1 à 3, **caractérisé en ce que** la face inférieure (15 ; 65) et la face supérieure (25 ; 75) des organes de préhension (6 ; 56) sont assemblées au moyen de vis.

5. Appareil électrique de cuisson selon la revendication 4, **caractérisé en ce que** la face inférieure (15 ; 65) desdits organes de préhensions (6 ; 56) comporte au moins un perçage (19 ; 69) apte à recevoir une vis venant en prise dans un logement (24 ; 76) de la face supérieure (25 ; 75).

6. Appareil électrique de cuisson selon l'une des revendications 1 à 5, **caractérisé en ce que** la paroi latérale annulaire inférieure (12 ; 62) comporte au moins un montant (48 ; 98) assemblé par vis avec un montant (100) issu de la paroi latérale annulaire supérieure (22, 72).

7. Appareil électrique de cuisson selon la revendication 6, **caractérisé en ce que** les montants (48 ; 98, 100) appartiennent à une conformation (46 ; 96) prévue pour l'enroulement du cordon électrique de l'appareil.

8. Appareil électrique de cuisson selon l'une des revendications 1 à 7, **caractérisé en ce qu'**une cavité (36 ; 86) est ménagée sous chacune des faces inférieures (15 ; 65) des organes de préhension (6 ; 56)

9. Appareil électrique de cuisson selon l'une des revendications 1 à 8, **caractérisé en ce que** les organes de préhension (6 ; 56) sont issus de la moitié supérieure du boîtier (1).

## Patentansprüche

1. Elektrisches Gargerät mit einem Gehäuse (1; 51), das eine obere Öffnung (23; 73) aufweist, in der eine Wanne (2; 52) angeordnet ist, die dazu vorgesehen ist, eine Garflüssigkeit zu enthalten, wobei das Gehäuse eine untere, ringförmige Seitenwand (12; 62) und eine obere, ringförmige Seitenwand (22; 72) aufweist, die aus Kunststoffmaterial bestehen, wobei zwei diametral entgegengesetzte Greiforgane (6; 56) aus dem Gehäuse (1; 51) hervorgehen, wobei jedes Greiforgan (6; 56) eine untere Fläche (15; 65) aufweist, die aus der unteren, ringförmigen Seitenwand (12; 62) hervorgeht, **dadurch gekennzeichnet, dass** jedes Greiforgan (6; 56) eine obere Fläche (25; 75) aufweist, die aus der oberen, ringförmigen Seitenwand (22; 72) hervorgeht, wobei die untere Fläche (15; 65) und die obere Fläche (25; 75) in Bezug auf die untere, ringförmige Seitenwand (12; 62) bzw. die obere, ringförmige Seitenwand (22; 72) hervorragen.

2. Elektrisches Gargerät nach Anspruch 1, **dadurch gekennzeichnet, dass** die Greiforgane (6; 56) hohl sind.

3. Elektrisches Gargerät nach Anspruch 1 oder 2, **dadurch gekennzeichnet, dass** die untere, ringförmige Seitenwand (12; 62) und die obere, ringförmige Seitenwand (22; 72) zwei Halbschalen bilden, wobei die untere, ringförmige Seitenwand (12; 62) mit einem Boden (11; 61) verbunden ist und die obere, ringförmige Seitenwand (22; 72) eine obere Öffnung (23; 73) umgibt.

4. Elektrisches Gargerät nach einem der Ansprüche 1 bis 3, **dadurch gekennzeichnet, dass** die untere Fläche (15; 65) und die obere Fläche (25; 75) der Greiforgane (6; 56) durch eine Schraube zusammengefügt sind.

5. Elektrisches Gargerät nach Anspruch 4, **dadurch gekennzeichnet, dass** die untere Fläche (15; 65) der Greiforgane (6; 56) mindestens eine Bohrung (19; 69) aufweist, die eine Schraube aufnehmen kann, die in einer Aufnahme (24; 76) der oberen Fläche (25; 75) in Eingriff gelangt.

6. Elektrisches Gargerät nach einem der Ansprüche 1 bis 5, **dadurch gekennzeichnet, dass** die untere, ringförmige Seitenwand (12; 62) mindestens einen Steg (48; 98) aufweist, der durch Schrauben mit einem Steg (100) zusammengefügt ist, der aus der oberen, ringförmigen Seitenwand (22, 72) hervorgeht.

7. Elektrisches Gargerät nach Anspruch 6, **dadurch gekennzeichnet, dass** die Stege (48; 98, 100) zur einer Form (46; 96) gehören, die zum Aufwickeln der Leitungsschnur des Geräts vorgesehen ist.

8. Elektrisches Gargerät nach einem der Ansprüche 1 bis 7, **dadurch gekennzeichnet, dass** unter jeder der unteren Flächen (15; 65) der Greiforgane (6; 56) ein Hohlraum (36; 86) ausgebildet ist.

9. Elektrisches Gargerät nach einem der Ansprüche 1 bis 8, **dadurch gekennzeichnet, dass** die Greiforgane (6; 56) aus der oberen Hälfte des Gehäuses (1) hervorgehen.

## Claims

1. An electrical cooking appliance having a housing (1; 51) provided with a top opening (23; 73) in which a bowl (2; 52) is disposed that is designed to contain a cooking liquid, the housing having a bottom annular side wall (12; 62) and a top annular side wall (22; 72) both of which are made of a plastics material, two diametrically opposite handle members (6; 56) being integral with the housing (1; 51), each handle member (6; 56) having a bottom segment (15; 65) integral with the bottom side wall (12; 62), said electrical cooking appliance being **characterized in that** each handle member (6; 56) has a top segment (25; 75) integral with the top annular side wall (22; 72), the bottom segments (15; 65) and the top segments (25; 75) projecting respectively relative to the bottom annular side wall (12; 62) and relative to the top annular side wall (22; 72).

2. An electrical cooking appliance according to claim 1, **characterized in that** the handle members (6; 56) are hollow.

3. An electrical cooking appliance according to claim 1 or claim 2, **characterized in that** the bottom annular side wall (12; 62) and the top annular side wall (22; 72) form respective ones of two half-shells, the bottom annular side wall (12; 62) being connected to a bottom (11; 61), and the top annular side wall (22; 72) surrounding a top opening (23; 73).

4. An electrical cooking appliance according to any one of claims 1 to 3, **characterized in that** the bottom segment (15; 65) and the top segment (25; 75) of each of the handle members (6; 56) are assembled together by means of screws.

5. An electrical cooking appliance according to claim 4, **characterized in that** the bottom segment (15; 65) of each of said handle members (6; 56) is provided with at least one bore (19; 69) suitable for receiving a screw that comes into engagement in a recess (24; 76) in the top segment (25; 75).

6. An electrical cooking appliance according to any one of claims 1 to 5, **characterized in that** the bottom annular side wall (12; 62) has at least one strut (48; 98) assembled by screws to a strut (100) integral with the top annular side wall (22; 72).

7. An electrical cooking appliance according to claim 6, **characterized in that** the struts (48; 98, 100) belong to a shaped portion (46; 96) designed for winding the electrical cord of the appliance.

8. An electrical cooking appliance according to any one of claims 1 to 7, **characterized in that** a cavity (36; 86) is provided under each of the bottom segments (15; 65) of the handle members (6; 56).

9. An electrical cooking appliance according to any one of claims 1 to 8, **characterized in that** the handle members (6; 56) are integral with the top half of the housing (1).
